(19) Europäisches Patentamt
European Patent Office
Office européen des brevets

(11) **EP 2 397 250 B1**

(12) **EUROPÄISCHE PATENTSCHRIFT**

(45) Veröffentlichungstag und Bekanntmachung des Hinweises auf die Patenterteilung:
**20.09.2017 Patentblatt 2017/38**

(51) Int Cl.:
***B23H 7/26*** *(2006.01)* ***B23H 1/02*** *(2006.01)*

(21) Anmeldenummer: **10006246.2**

(22) Anmeldetag: **16.06.2010**

(54) **Verfahren und Vorrichtung zur funkenerosiven Bearbeitung eines Werkstücks**

Method and device for electrical discharge processing of a work piece

Procédé et dispositif destinés au traitement par étincelage d'une pièce usinée

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**21.12.2011 Patentblatt 2011/51**

(73) Patentinhaber: **Agie Charmilles SA**
**6616 Losone (CH)**

(72) Erfinder:
• **Boccadoro, Marco**
**6653 Verscio (CH)**

• **Knaak, Reto**
**6612 Ascona (CH)**

(74) Vertreter: **Samson & Partner Patentanwälte mbB**
**Widenmayerstraße 6**
**80538 München (DE)**

(56) Entgegenhaltungen:
**EP-A2- 0 076 150 EP-A2- 1 415 747**
**JP-A- 53 143 099 JP-A- 54 109 697**
**JP-A- 56 089 438**

## Beschreibung

Gebiet der Erfindung

Die Erfindung betrifft die funkenerosive Bearbeitung eines Werkstückes und insbesondere eine Vorrichtung zur funkenerosiven Senkbearbeitung und/oder Drahtbearbeitung (EDM) eines Werkstückes und ein Verfahren zum Steuern einer funkenerosiven Senkbearbeitung und/oder Drahtbearbeitung eines Werkstückes.

Hintergrund der Erfindung

Zur funkenerosiven Bearbeitung von Werkstücken sind insbesondere Senkerosions- und Drahterosionsmaschinen bekannt. Bei der Senkbearbeitung befindet sich eine Werkzeugelektrode gegenüber einer Oberfläche eines elektrisch leitenden Werkstückes in einem definierten Abstand, der als Spalt bezeichnet wird. Durch Anlegen eines hohen elektrischen Feldes an den Spalt, d.h. zwischen Werkzeugelektrode und Werkstück, entstehen Funken zwischen der Werkzeugelektrode und dem Werkstück, die zu einem Materialabtrag auf dem Werkstück führen. Das elektrische Feld wird typischerweise durch Bearbeitungspulse erzeugt, die von einem Generator erzeugt und an die Werkzeugelektrode geleitet werden.

Auf ähnliche Weise funktioniert die Drahterosionsmaschine, die als Werkzeugelektrode einen Elektrodendraht verwendet. Auch hier erzeugen Funken an dem Spalt zwischen der Drahtelektrode und dem Werkstück einen Materialabtrag.

Weiterhin ist es bekannt, mehr als eine Werkzeugelektrode für die funkenerosive Bearbeitung zu verwenden.

So offenbart bspw. das US-Patent US 6,548,028 B1, für die funkenerosive Oberflächenbearbeitung mehrere von einander elektrisch isolierte Werkzeugelektroden zu verwenden. Um die einzelnen Werkzeugelektroden einzeln anzusteuern, wird jede Werkzeugelektrode separat von einem zugehörigen Generator mit Pulsen versorgt. Eine ähnliche Senkerosionsmaschine mit mehreren Werkzeugelektroden und jeweils zugehörigem Generator ist auch in JP 2001269818 (A) gezeigt.

Aus der europäischen Patentanmeldung EP 0 879 664 A1 ist eine funkenerosive Drahtbearbeitung bekannt, bei der wenigstens zwei voneinander elektrisch isolierte Drahtelektroden verwendet werden. Jede Drahtelektrode ist mit einer eigenen Strom- bzw. Spannungsquelle verbunden.

Aus JP 56 089438 A ist für die funkenerosive Bearbeitung bekannt, eine geteilte Werkzeugelektrode zu verwenden, wobei jeder Teil der Werkzeugelektrode separat mit einer Stromquelle verbunden ist.

Das Dokument EP 1 415 747 A2 offenbart eine Vorrichtung zur funkenerosiven Bearbeitung, die zwei Arbeitsstationen hat, auf denen jeweils ein Werkstück bearbeitet wird. Jede Arbeitsstation hat einen eigenen Arbeitskopf mit zwei nicht galvanisch getrennten Elektroden. Die Pinole der Vorrichtung kann jeweils an der aktiven Arbeitsstation positioniert werden.

Ein Mehrkanalsystem bei denen mehrere Elektroden einer Werkzeugmaschine jeweils einzeln von einem Generator kontaktiert werden ist aus den Dokumenten EP 0 076 150 A2 und JP 54 109697 A bekannt.

Aus JP 53 143099 A ist eine Werkzeugmaschine zur funkenerosiven Bearbeitung bekannt, bei der eine Werkzeugelektrode mehrere Teilelektroden hat, die jeweils von einem Generator mit Impulsen über einen zeitlichen Verteilungskreis versorgt werden.

Aufgabe der vorliegenden Erfindung ist es, eine verbesserte Vorrichtung und ein verbessertes Verfahren für die funkenerosive Senkbearbeitung und/oder Drahtbearbeitung (EDM) eines Werkstückes bereitzustellen.

Zusammenfassung der Erfindung

Nach einem ersten Aspekt stellt die Erfindung eine Vorrichtung zur funkenerosiven Bearbeitung eines Werkstückes in Übereinstimmung mit dem unabhängigen Patentanspruch 1 bereit. Nach einem zweiten Aspekt stellt die vorliegende Erfindung ein Verfahren zum Steuern einer Vorrichtung zur funkenerosiven Bearbeitung eines Werkstückes nach dem ersten Aspekt und in Übereinstimmung mit Patentanspruch 8 bereit.

Weitere Aspekte der Erfindung ergeben sich aus den abhängigen Ansprüchen, den beigefügten Zeichen und der nachfolgenden Beschreibung bevorzugter Ausführungsbeispiele. Kurzbeschreibung der Zeichnungen Nachfolgend werden unter Bezugnahme auf die beiliegenden Zeichnungen bevorzugte Ausführungsbeispiele der Erfindung näher erläutert.

Es zeigen:

Fig. 1    ein Blockschema einer Senkerosionsmaschine nach dem Stand der Technik;

Fig. 2    ein Blockschema einer Drahterodiermaschine nach dem Stand der Technik;

Fig. 3a   ein Blockschema einer bekannten Senkerosionsmaschine mit zwei Werkzeugelektroden;

Fig. 3b   ein Blockschema einer bekannten Drahterodieranlage mit zwei Werkzeugelektroden;

Fig. 4    ein Blockschema eines Ausführungsbeispieles einer Senkerosionsmaschine mit einem Demultiplexer in Übereinstimmung mit der vorliegenden Erfindung;

Fig. 5a   ein Ausführungsbeispiel einer Demultiplexerschaltung, die in der Senkerosionsmaschine von Fig. 4 verwendet werden kann;

Fig. 5b   ein Ausführungsbeispiel einer Demultiplexerschaltung mit Kurzschlussschaltung, die in der Senkerosionsmaschine von Fig. 4 verwendet werden kann;

Fig. 6a   eine Steuersequenz zur Steuerung des Demultiplexers nach Fig. 4 und Fig. 5a;

Fig. 6b    eine Steuersequenz mit einem Tastverhältnis von nahezu 50% zur Steuerung des Demultiplexers nach Fig. 4 und Fig. 5a;

Fig. 6c    eine Steuersequenz zur Steuerung des Demultiplexers mit Kurzschlussschaltung nach Fig. 5b;

Fig. 7    ein Ausführungsbeispiel einer segmentierten Werkzeugelektrode mit einem beweglichen Stromkontakt; und

Fig. 8    ein weiteres Ausführungsbeispiel einer segmentierten Werkzeugelektrode mit einem beweglichen Stromkontakt.

<u>Beschreibung bevorzugter Ausführungsbeispiele</u>

Vor einer detaillierten Beschreibung der Ausführungsbeispiele in Übereinstimmung mit der vorliegenden Erfindung, folgen zunächst einige allgemeine Erläuterungen zu den bevorzugten Ausführungsbeispielen.

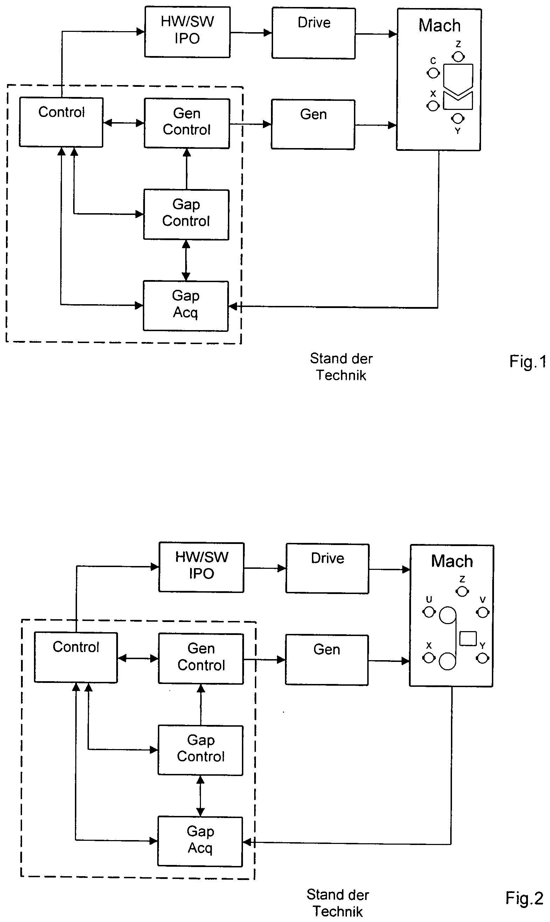

Fig. 1 zeigt einen generellen Aufbau einer Senkerosionsmaschine nach dem Stand der Technik und Fig. 2 zeigt den generellen Aufbau einer Drahterodiermaschine nach dem Stand der Technik, wie er im Wesentlichen, bis auf die unten erläuterten Unterschiede, auch bei manchen Ausführungsbeispielen der vorliegenden Erfindung zum Einsatz kommt.

Sowohl die Senkerosions- als auch die Drahterodiermaschine nach Fig. 1 und Fig. 2 bestehen im Wesentlichen aus einem Steuerungsblock, einem Interpolatormodul (HW/SW IPO), einem oder mehreren Antriebsmodulen (DRIVE), einem Generator (GEN) und Maschinenelementen, die in Fig. 1 und Fig. 2 mit "Mach" bezeichnet sind.

Der Steuerungsblock, der in Fig. 1 und Fig. 2 als gestrichelter Bereich gekennzeichnet ist, umfasst ein Steuermodul (CONTROL), ein Generatorsteuermodul (GEN CONTROL), ein Spaltsteuermodul (GAP CONTROL) und ein Spalterfassungsmodul (GAP ACQ).

Das Interpolatormodul (HW/SW IPO), das Generatorsteuermodul (GEN CONTROL) und das Spaltsteuermodul (GAP CONTROL) sind bspw. durch jeweils einen FPGA (Field Programmable Gate Array) gebildet oder sie können gemeinsam durch einen einzelnen, komplexeren FGPA gebildet sein. Bei manchen Ausführungsbeispielen können sie auch in Kombination mit einem Microcontroller, einem DSP (Digital Signal Processor), oder einem Prozessor gebildet sein.

Die Maschinenelemente (MACH) umfassen bspw. die Mechanik, wie die Werkzeugelektrode, d.h. Senkelektrode (Fig. 1) bzw. Drahtelektrode (Fig. 2), den Stellantrieb (durch X, Y, Z, C in Fig. 1 und 2 angedeutet), das Dielektrikumsaggregat usw.

Das Steuermodul (CONTROL) kann bspw. einen industriellen PC und/oder einen Mikrocontroller umfassen und es steuert im Wesentlichen die Bearbeitungssequenz.

Das Interpolatormodul (HW/SW IPO) ist ein hochdynamisches numerisches Steuersystem (Interpolator), so wie es bspw. in der deutschen Patentanmeldung DE 36 44 952 A1 beschrieben ist, deren Inhalt durch Bezugnahme vollständig hierin aufgenommen wird. Der Interpolator kann bei manchen Ausführungsbeispielen auch als Software realisiert sein. Der Sollwert des Interpolators wird dem oder den Antriebsmodulen (DRIVE) zugeführt, um bspw. die X-, Y-, Z- und C-Achsen entsprechend anzusteuern (weitere Achsen sind möglich).

Das Generatorsteuermodul (GEN CONTROL) erzeugt die Pulsfolgen, die in Spannungs- und Strompulsen durch den Generator umgewandelt und die entsprechend der Werkzeugelektrode zur Funkenerzeugung und Werkstückbearbeitung zugeführt werden.

Das Spaltsteuermodul (GAP CONTROL) umfasst typischerweise Schutzschaltungen, um Prozessentartungen zu beheben oder zu vermeiden.

Das Spalterfassungsmodul (GAP ACQ) erfasst die Spaltspannung und den Spaltstrom und führt die entsprechenden Werte dem Steuermodul (CONTROL) zur Steuerung des Bearbeitungsprozesses zu.

Die bekannte Senkerosions- und Drahterodiermaschine nach Fig. 1 bzw. Fig. 2 weisen jeweils eine einzelne Werkzeugelektrode auf. Wie eingangs erwähnt, ist es auch bekannt, mehrere Werkzeugelektroden zu verwenden.

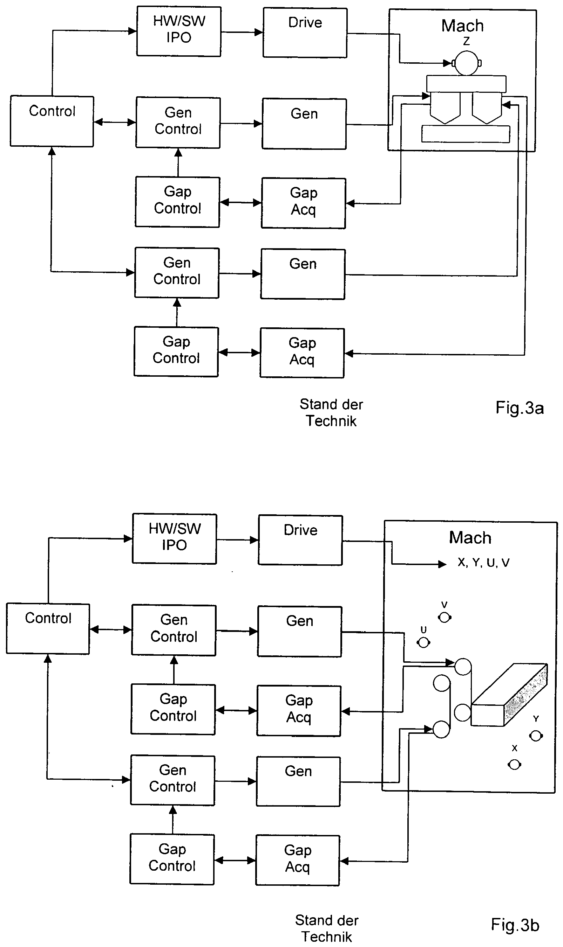

Beispielhaft ist in Fig. 3a eine Senkerosionsmaschine mit zwei Senkelektroden als Werkzeugelektroden gezeigt und in Fig. 3b eine Drahterodiermaschine mit zwei Drahtelektroden als Werkzeugelektroden.

Dabei zeigen Fig. 3a und Fig. 3b, dass bei einer einfachen Mehrkanalmaschinenschaltung für mehrere Werkzeugelektroden, wie sie in den eingangs erwähnten Dokumenten US 6,548,028 B1, JP 2001269818 (A) und EP 0 879 664 A1 für die Senk- bzw. Drahterosion angedeutet ist, ein zusätzlicher Mehraufwand pro Kanal, d.h. pro anzusteuernder Werkzeugelektrode, erforderlich ist.

Es sind nämlich pro weiterer Kanal, d.h. pro weiterer anzusteuernder Werkzeugelektrode, ein Generator (GEN), eine Generatorsteuermodul (GEN CONTROL), entsprechende Elektrodenkabel, Generatorspeisung, Spalterfassungselektronik (GAP ACQ), Spaltsteuermodul (GAP CONTROL) usw. zusätzlich notwendig.

Außerdem muss jeder Kanal elektrisch an die zugehörige Werkzeugelektrode angeschlossen werden. Bei einkanaligen Ausführungen einer Senkerosionsmaschine wird dies bspw. durch einen Kontakt in der Pinole (Maschinenkopf) realisiert. Bei einer mehrkanaligen Ausführung ist dies nicht ohne Weiteres möglich. Man könnte bspw. zusätzliche Kabel vorsehen, um die einzelnen Kanäle, d.h. die einzelnen Werkzeugelektroden jeweils mit der zugehörigen Elektronik, wie Generator (GEN), Generatorsteuermodul (GEN CONTROL), Spaltsteuermodul (GAP CONTROL) und Spalterfassungsmodul (GAP ACQ) zu verbinden. Dies kann allerdings bei manchen Ausführungsbeispielen zu Konflikten mit einem Werkzeugwechsler führen, da ein entsprechend dicker Kabelstrang entstehen kann, der den für den Werkzeugwechsler benötigten Raum versperrt.

Folglich entstehen bei manchen Mehrkanalmaschinen zusätzliche Kosten, eine erhöhte Komplexität der Elektronik und eine erschwerte Automatisierung. Entsprechend werden solche Mehrkanalmaschinen typischerweise selten und hauptsächlich für größere Werkzeugelektroden eingesetzt.

Die Erfinder haben nun erkannt, dass einerseits moderne Generatoren in der Lage sind, Pulse mit hohen Frequenzen und hohem Wirkungsgrad zu erzeugen. Andererseits ist die Pulsfrequenz, die für den Erosionsprozess benötigt wird, meistens bedeutend tiefer als die technisch mögliche. Deshalb ist es möglich, mit einem Generator mehrere Kanäle, d.h. mehrere Werkzeugelektroden, zu speisen, ohne die Maschine notwendigerweise zu verteuern.

Entsprechend ist bei manchen Ausführungsbeispielen ein Schaltelement, bspw. ein Demultiplexer, zwischen den Werkzeugelektroden und der übrigen Elektronik, insbesondere dem Generator, vorgesehen. Das Schaltelement, wie bspw. ein Demultiplexer, weist bei manchen Ausführungsbeispielen einen Eingang, einige Steuerleitungen und mehrere Ausgänge auf. Je nach dem Zustand der Steuerleitungen wählt das Schaltelement (Demultiplexer) einen oder mehrere Ausgänge, der/die mit dem Eingang verbunden wird/werden und verbindet auf diese Weise den Eingang mit jeweils einer, mehreren oder allen zugehörigen Werkzeugelektroden, die mit dem entsprechenden Ausgang des Schaltelements verbunden ist/sind.

Folglich können bei manchen Ausführungsbeispielen mehrere Werkzeugelektroden gleichzeitig auf demselben Werkstück verwendet werden, was im Folgenden auch als Mehrkanalbetrieb bezeichnet wird. Auf diese Weise kann die Werkzeugelektrode, auf welcher die Entladung erfolgen soll, bestimmt werden und bspw. kann die Konzentration der Entladungen, d.h. dass wiederholte Auftreten aufeinanderfolgender Entladungen an derselben Stelle vermieden werden. Andererseits kann dadurch die Produktivität der Funkenerosionsmaschine, bspw. Senkerosions- oder Drahterodiermaschine gesteigert werden.

Bei manchen Ausführungsbeispielen umfasst dementsprechend eine Vorrichtung zur funkenerosiven Bearbeitung, insbesondere zur Senkbearbeitung und/oder Drahtbearbeitung, eines (elektrisch leitenden) Werkstückes, eine Steuerung zum Steuern der Bearbeitung des Werkstücks; ein Generatormodul zum Erzeugen von Generatorpulsen; wenigstens eine erste und eine zweite Werkzeugelektrode (z.B. Senk- oder Drahterodierelektrode); und wenigstens ein Schaltelement, das mit dem Generator und der ersten und zweiten Werkzeugelektrode verbunden ist. Die Steuerung steuert das Schaltelement derart, dass der Generator entweder mit der ersten oder der zweiten Werkzeugelektrode verbunden ist und dadurch die Generatorpulse entweder der ersten oder der zweiten Werkzeugelektroden zuführt.

Bei manchen Ausführungsbeispielen steuert die Steuerung das Schaltelement auch derart, dass der Generator mit der ersten und der zweiten Werkzeugelektrode verbunden ist und dadurch die Generatorpulse der ersten und der zweiten Werkzeugelektroden gleichzeitig zuführt.

Bei manchen Ausführungsbeispielen ist die Vorrichtung ähnlich den bekannten und oben beschriebenen Senkerosions- bzw. Drahterodiermaschinen ausgestaltet und weist bspw. einen Steuerung mit einem Steuermodul, einem Generatorsteuermodul, einem Spaltsteuermodul und einem Spalterfassungsmodul auf, wie oben beschrieben. Außerdem weist bspw. die Vorrichtung ein Interpolatormodul und ein oder mehrere Antriebsmodule auf, sowie die entsprechenden Maschinenelemente, wie oben beschrieben.

Bei manchen Ausführungsbeispielen weist die Vorrichtung eine Leitung, bspw. ein Kabel, auf, das vom Generator zum Schaltelement geführt ist. Das Schaltelement ist bei solchen Ausführungsbeispielen bspw. direkt an der ersten und zweiten Werkzeugelektrode bzw. direkt an einem Werkzeugelektrodenhalter, der die Werkzeugelektroden hält, angeordnet. Durch die direkte Anordnung des Schaltelements an der Werkzeugelektrode, ist es nicht notwendig, für jeden Kanal, d.h. für jede anzusteuernde Werkzeugelektrode, eine einzelne Leitung vom Generator und/oder von der Steuerung bis zur jeweiligen Werkzeugelektrode zu führen. Es reicht vielmehr, eine einzelne Leitung vom Generator und/oder der Steuerung zu einem Eingang des Schaltelements zu führen. Das Schaltelement weist, wie auch oben beschrieben, mehrere Ausgänge auf, die jeweils direkt mit jeweils einer zugehörigen Werkzeugelektrode verbunden sind. Bei manchen Ausführungsbeispielen weist bspw. das Schaltelement pro Werkzeugelektrode einen Ausgang auf. Bei anderen Ausführungsbeispielen können aber auch mehrere Werkzeugelektroden mit einem Ausgang des Schaltelements verbunden sein.

Das Schaltelement verbindet in Abhängigkeit eines von der Steuerung empfangenen Steuersignals seinen Eingang mit einem entsprechenden Ausgang des Schaltelements. Auf diese Weise können vom Generator erzeugte Generatorpulse, d.h. Spannungs- und Strompulse, die am Eingang des Schaltelements empfangen werden, bspw. abwechselnd auf die einzelnen Ausgänge des Schaltelements verteilt werden und somit an die jeweils mit dem Ausgang verbundene Werkzeugelektrode geleitet werden.

Bei manchen Ausführungsbeispielen sind Werkzeugelektroden, d.h. die mindestens erste und zweite Werkzeugelektrode, als (erste und zweite) Werkzeugelektrodensegmente gemeinsam auf einer Werkzeugelektrode ausgebildet. D.h. bei manchen Ausführungsbeispielen einer Senkerosionsmaschine, im Folgenden zur Vereinfachung auch Senkmaschine genannt, ist die Werkzeugelektrode in (Werkzeugelektroden-)Segmente aufgeteilt.

Jedes (Werkzeugelektroden-)Segment wird durch das Schaltungselement separat vom Generator gespeist. Da bei manchen Ausführungsbeispielen jedes Segment kleiner als die gesamte Elektrodenfläche ist, wird die elektrische Kapazität zwischen einer Werkstückelektrode und den Werkzeugelektrodensegmenten der einzelnen Kanäle kleiner. Damit kann man bei manchen Ausführungsbeispielen eine bessere Oberflächenrauheit erzielen, wie weiter unten erläutert.

Bei manchen Ausführungsbeispielen sind die erste und zweite Werkzeugelektrode bzw. (Werkzeugelektroden-)Segmente durch ein Isoliermaterial, wie bspw. Vetronit, elektrisch voneinander isoliert.

Bei manchen Ausführungsbeispielen umfasst die Vorrichtung weiter eine Kurzschlussschaltung. Die Steuerung schließt bspw. die nicht aktiven Werkzeugelektroden zwischen zwei Kanalpulsen, d.h. zwischen zwei für denselben Kanal bestimmten Generatorpulsen, kurz. Bei manchen Ausführungsbeispielen schließt die Steuerung die aktiven und/oder nicht aktiven Werkzeugelektroden zwischen zwei Kanalpausen kurz. Dadurch können bei manchen Ausführungsbeispielen unerwünschte Spannungen an den Werkzeugelektroden abgebaut und die Entionisierung des Spaltes beschleunigt werden.

Bei manchen Ausführungsbeispielen weist das Schaltelement zumindest einen zusätzlichen Eingang auf, über welchen auf die nicht aktive Werkzeugelektrode ein beliebiges Spannungs- und Stromsignal aufgebracht werden kann. Bspw. kann die jeweils nicht aktive Werkzeugelektrode mit einer Spannungsquelle verbunden werden, welche eine Spannung entgegengesetzter Polarität gegenüber der Arbeitsspannung aufbringt. Auf diese Weise kann die mittlere Spannung zwischen dem Werkstück und der Werkzeugelektrode minimiert werden. Insbesondere kann bei solchen Ausführungsbeispielen bei funkenerosiver Bearbeitung in deionisiertem Wasser die elektrolytische Korrosion vermieden werden.

Bei manchen Ausführungsbeispielen schaltet die Steuerung das Schaltelement derart, dass die Werkzeugelektroden, d.h. bspw. die erste und zweite Werkzeugelektrode, derart abwechselnd mit dem Generator verbunden sind, dass abwechselnd jeweils eine erste und eine zweite Anzahl an einzelnen Generatorpulsen der ersten bzw. der zweiten Werkzeugelektrode zugeführt wird.

Bei manchen Ausführungsbeispielen ist das Schaltelement bipolar, bei anderen hingegen unipolar ausgebildet. Das bipolare Schaltelement kann - im Gegensatz zu einem unipolaren Schaltelement - mit positiven als auch negativen Spannungen betrieben werden.

Bei manchen Ausführungsbeispielen umfasst die Vorrichtung einen bewegbaren Stromzuführungskontakt. Der Stromzuführungskontakt kann bei manchen Ausführungsbeispielen zum automatischen Kontaktieren der Werkzeugelektroden dienen. Dabei wird vor einem Werkzeugelektrodenwechsel der Stromzuführungskontakt in eine Stellung gebracht, in der er den Kontakt zu den Werkzeugelektroden freigibt. Dann wird die Werkzeugelektrode gegen eine neue ausgetauscht und der Stromzuführungskontakt wird in eine Stellung gebracht, in der er die einzelnen Werkzeugelektroden kontaktiert. Der Stromzuführungskontakt ist bei manchen Ausführungsbeispielen entsprechend ausgestaltet, dass er je eine Werkzeugelektrode mit jeweils einem Ausgang des Schaltungselements verbindet.

Manche Ausführungsbeispiele betreffen ein Verfahren zum Steuern einer funkenerosiven Bearbeitung, insbesondere Senkbearbeitung und/oder Drahtbearbeitung, eines Werkstückes. Dabei wird das Verfahren beispielsweise von einer Steuerung der oben beschriebenen Vorrichtung ausgeführt. Nach dem Verfahren wird mittels eines Generators eine Anzahl von Generatorpulsen, d.h. Strompulsen erzeugt. Ein Schaltelement, wie oben beschrieben, wird derart gesteuert, dass die vom Generator erzeugten Generatorpulse entweder wenigstens einer ersten oder einer zweiten Werkzeugelektrode, bspw. einer Senk- oder Drahterosionsmaschine, zugeführt werden.

Wie oben beschrieben kann jeweils ein einzelner Generatorpuls abwechselnd der ersten oder zweiten Werkzeugelektrode zugeführt werden. Allgemein werden eine erste und eine zweite Anzahl aufeinanderfolgender Generatorpulse abwechselnd der ersten bzw. der zweiten Werkzeugelektrode zugeführt. Das Verhältnis von erster zu zweiter Anzahl wird beispielsweise in Abhängigkeit der Geometrie der Werkzeugelektroden gesteuert.

Es können auch die Werkzeugelektroden kurzgeschlossen werden, bspw. in Pulspausen, d.h. in Zeitintervallen, in denen gerade kein Generatorpuls zugeführt wird.

Bei manchen Ausführungsbeispielen wird wenigstens eine Spalteigenschaft des Spalts zwischen den Werkzeugelektroden und dem Werkstück ermittelt. Dies kann bspw. mittels der oben beschriebenen Steuerung und dem Spalterfassungsmodul durchgeführt werden. Die wenigstens eine ermittelte Spalteigenschaft wird dann der Werkzeugelektrode zugeordnet, die zum Ermittlungszeitpunkt aktiv war, d.h. der Werkzeugelektrode, die die entsprechenden Spalteigenschaften hervorgerufen hat.

Bei manchen Ausführungsbeispielen umfasst die Spalteigenschaft wenigstens eine der der folgenden Eigenschaften: Zündverzögerungszeit, Leerlaufspannung, Brennspannung, Anzahl der Kurzschlüsse pro vorgegebener Zeiteinheit, Spaltspannung während einer Pulspause zwischen wenigstens zwei Generatorpulsen, Spaltspannung während einer Pulspause zwischen wenigstens zwei Generatorpulsen bei einer vorgegebenen, angelegten Spaltspannung, Hochfrequenzanteil der Brennspannung.

Bei manchen Ausführungsbeispielen wird die Anzahl und/oder die Eigenschaft der Generatorpulse, die der aktiven Werkzeugelektrode zugeführt werden, in Abhängigkeit der momentanen Spalteigenschaft und/oder der Spalteigenschaft derselben Werkzeugelektrode, die zu einem früheren Ermittlungszeitpunkt ermittelt wurde, gesteuert.

Bei manchen Ausführungsbeispielen kann durch die Erfassung der Spalteigenschaften an jedem Kanal eine Information über den Fortschritt der funkenerosiven Bearbeitung am jeweiligen Kanal abgeleitet werden. Zum Beispiel kann man prüfen, ob die Bearbeitung homogen zwischen den Werkzeugelektroden abläuft. Speziell beim Schlichten ist es somit möglich, die Erosionszeit kanalspezifisch exakt zu überwachen bzw. festzulegen, um die Qualität der erreichten Oberfläche besser zu garantieren.

Bei manchen Ausführungsbeispielen wird die Anzahl der einer Werkzeugelektrode aufeinanderfolgend zugeführten Generatorpulse in Abhängigkeit der Geometrie, bspw. der Elektrodenflächengröße, der Werkzeugelektrode gesteuert.

Bei manchen Ausführungsbeispielen wird wenigstens eine Pulspause zwischen den einer Werkzeugelektrode zugeführten Generatorpulsen in Abhängigkeit der geometrischen Ausbildung der Werkzeugelektrode, d.h. der geometrischen Lage einer ersten Werkzeugelektrode relativ zu wenigstens einer anderen Werkzeugelektrode gesteuert. Bei manchen Ausführungsbeispielen hängt eine Spüleigenschaft im Spalt einer Werkzeugelektrode von der geometrischen Lage dieser Werkzeugelektrode relativ zu einer anderen Werkzeugelektrode ab. Beispielsweise kann eine Werkzeugelektrode, die von anderen Werkzeugelektroden umgeben ist, schlechtere Spüleigenschaften aufweisen als beispielsweise eine äußere Werkzeugelektrode, die von weniger Nachbar-Werkzeugelektroden umgeben ist. Bei einer solchen inneren Werkzeugelektrode mit vielen Nachbarn sind die Pulspausen bei manchen Ausführungsbeispielen größer als bei einer äußeren Werkzeugelektrode mit weniger benachbarten Werkzeugelektroden.

Manche Ausführungsbeispiele betreffen einen Bausatz für eine Vorrichtung zur funkenerosiven Bearbeitung eines Werkstücks mit einer Steuerung zum Steuern der Bearbeitung des Werkstücks, einem Generatormodul zum Erzeugen von Generatorpulsen und wenigstens einer ersten und einer zweiten Werkzeugelektrode. Der Bausatz umfasst ein Schaltelement mit einem Eingang zur Verbindung mit dem Generator und zwei Ausgängen zur jeweiligen Verbindung mit der ersten und der zweiten Werkzeugelektrode. Das Schaltelement ist derart steuerbar ausgestaltet, dass es den Generator in Reaktion auf ein Steuersignal entweder mit der ersten oder der zweiten Werkzeugelektrode verbindet und dadurch die Generatorpulse entweder der ersten oder der zweiten Werkzeugelektrode zuführt. Das Steuersignal kann dabei von der Steuerung der Vorrichtung erzeugt werden oder von einer Steuerung, die ebenfalls in dem Bausatz integriert ist. Die in dem Bausatz integrierte Steuerung analysiert die empfangenen Generatorpulse und schaltet entsprechend das Schaltelement, um die Generatorpulse der jeweiligen Werkzeugelektrode zuzuführen.

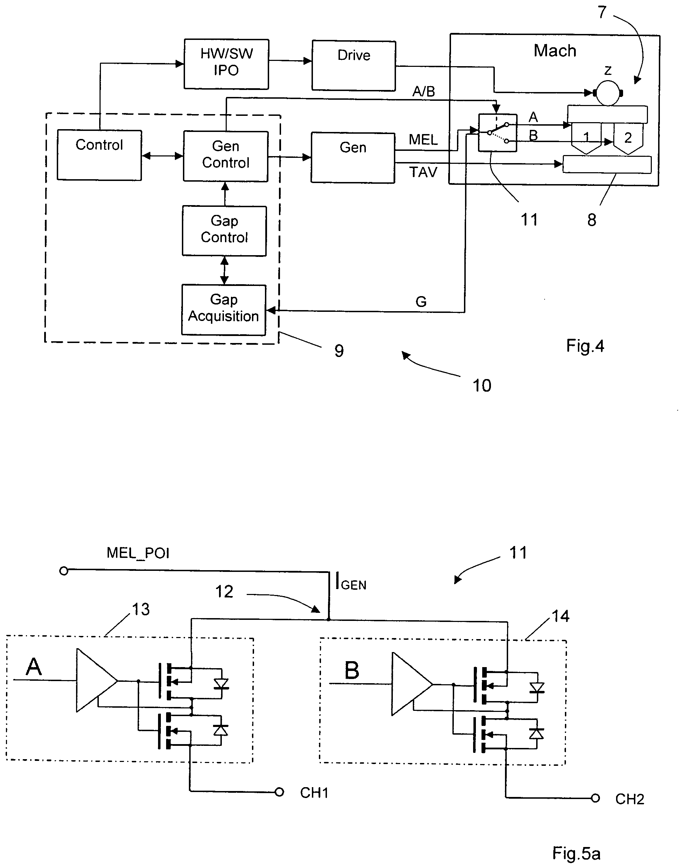

Zurückkommend zu Fig. 4 umfasst ein Ausführungsbeispiel einer Senkmaschine 10 eine Mehrkanalmaschinenschaltung. Die Senkmaschine 10 ist ähnlich zu der bekannten Senkerosionsmaschine nach Fig. 1 aufgebaut. Die Senkmaschine 10 weist eine Steuerung 9 auf, die wiederum ein Steuermodul CONTROL, ein Generatorsteuermodul GEN CONTROL, ein Spaltsteuermodul GAP CONTROL und ein Spalterfassungsmodul GAP ACQ aufweist, wie sie auch schon oben beschrieben wurden. Außerdem hat die Senkmaschine 10 ein Interpolatormodul HW/SW IPO, ein Antriebsmodul DRIVE, das mit einem Maschinenkopf 7 verbunden ist, und einen Generator GEN. Die Senkmaschine 10 ist zweikanalig ausgebildet und sie hat entsprechend eine erste Werkzeugelektrode 1 und eine zweite Werkzeugelektrode 2, die jeweils als Senkelektrodensegmente einer Werkzeugelektrode ausgebildet sind. Zur Vereinfachung ist in der folgenden Beschreibung mit "Werkzeugelektrode" die gesamte Werkzeugelektrode gemeint, während sich die Begriffe Senkelektrodensegment oder Werkzeugelektrodensegment auf entsprechendes Segment dieser Werkzeugelektrode beziehen. Die einzelnen Segmente der Werkzeugelektrode sind bspw. galvanisch voneinander getrennt sind. Bei anderen Ausführungsbeispielen kann die Senkmaschine 10 auch mehr als zwei Kanäle, d.h. auch mehr als zwei Senkelektrodensegmente aufweisen.

Um vom Generator GEN erzeugte Strompulse MEL auf beide Senkelektrodensegmente 1 und 2 zu verteilen, ist zwischen dem Generator GEN und den Senkelektrodensegmenten 1 und 2 ein Demultiplexer 11 angeordnet. Der Demultiplexer 11 ist in Fig. 4 als ein Schalter dargestellt, der die vom Generator GEN kommenden Spannungs- und Strompulse von seinem Eingang auf einen ersten oder zweiten Ausgang schaltet und so an das erste 1 oder zweite 2 Senkelektrodensegment leitet. Bei manchen Ausführungsbeispielen ist der Demultiplexer 11 so ausgestaltet, dass er die Spannungs- und Strompulse auch an beide Senkelektrodensegmente 1 und 2 gleichzeitig leiten kann.

Ein vom Generatorsteuermodul GEN CONTROL kommendes Signal A/B steuert den Demultiplexer 11 und verbindet den Generator GEN über die Elektrodenkabel jeweils mit dem Senkelektrodensegment 1 oder 2. Ein weiteres Elektrodenkabel TAV wird vom Generator GEN an das Werkstück 8 geleitet, sodass eine Funkenüberschlag zwischen den jeweiligen Senkelektrodensegmenten 1 oder 2, an denen gerade ein Stromsignal des Generators GEN anliegt, und dem Werkstück 8 erfolgen kann.

Ein weiteres Signal G wird der Spalterfassungselektronik GAP ACQ zugeführt. Dazu besteht eine Verbindung zwischen dem Eingang des Demultiplexers 11 und dem Spalterfassungsmodul GAP ACQ der Steuerung 9.

Das Signal G umfasst vorzugsweise die Spaltspannung und/oder den Spaltstrom. Es dient dem Spalterfassungsmodul GAP ACQ, um die zur Prozessregelung notwendigen Größen, bspw. die Zündverzögerungszeit abzuleiten. Diese Topologie stellt einen weiteren Vorteil der Erfindung dar, nämlich dass ein einziges Signal, wie es bei standard-monokanaligen Maschinen vorliegt, genügt, um die Information über den Zustand mehrerer Kanäle zum Spalterfassungsmodul GAP ACQ zu leiten, sodass in erster Annäherung das Spalterfassungsmodul GAP ACQ einer Standardmaschine ohne besondere Änderung verwendet werden kann. Das Spalterfassungsmodul GAP ACQ weiß bei manchen Ausführungsbeispielen prinzipiell nicht, ob es mehrere Kanäle gibt.

Zusätzliche Module (GEN CONTROL, GAP CONTROL, GAP ACQ, GEN), wie sie bspw. bei den bekannten im Zusammenhang mit den Fig. 3a und 3b beschriebenen Senkerosions- bzw. Drahterodiermaschinen notwendig sind, können hier entfallen. Ein Generator GEN ist für Anzahl von N Kanälen ausreichend, da der Demultiplexer 11 entsprechend die Strompulse des Generators GEN auf N Kanäle verteilt.

Bei manchen Ausführungsbeispielen werden die Kanäle vom Demultiplexer 11 abwechselnd nacheinander geschaltet, d.h. ein Generatorimpuls pro Kanal. Die Umschaltung erfolgt in der Pause zwischen einem Generatorimpuls und dem Nächsten, d.h. bei möglichst niedriger Spannung bzw. möglichst niedrigem Strom. Dadurch ist bei manchen Ausführungsbeispielen die Umschaltung weniger kritisch, d.h. die Flanken der Strompulse bleiben durch den Generator GEN bestimmt. Bei manchen Ausführungsbeispielen hat der Demultiplexer 11 dann praktisch keinen Einfluss auf die Pulsform der Generatorpulse und somit bleibt die Erosionstechnologie kompatibel.

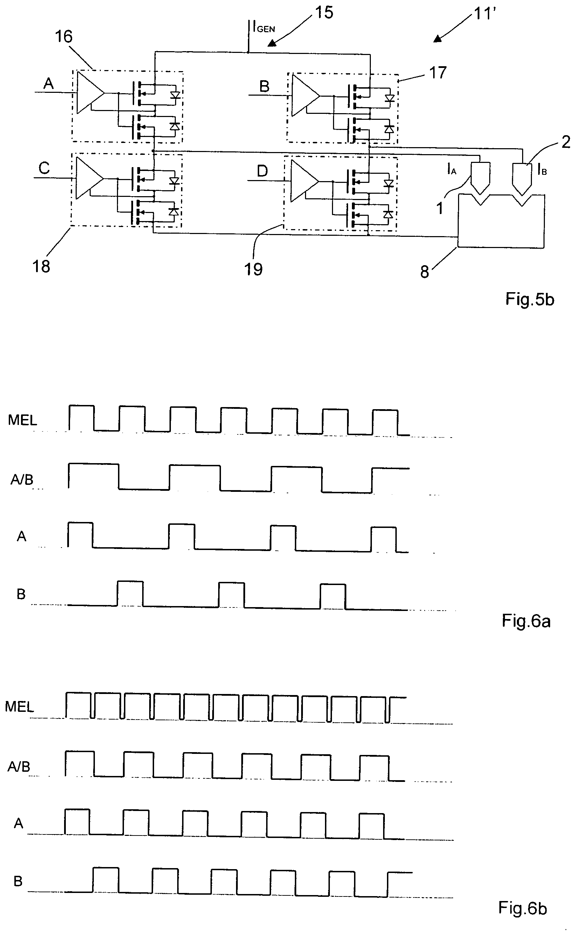

Die Demultiplexerschaltung des Demultiplexers 11 ist näher in Fig. 5a gezeigt. Grundsätzlich kann der Demultiplexer unipolar oder bipolar realisiert werden, die in Fig. 5 gezeigte Ausführungsform des Demultiplexers 11 ist bipolar ausgebildet und besteht aus einer Anzahl gleicher Demultiplexerabschnitte 13 und 14.

Jeder Demultiplexerabschnitt 13 und 14 weist zwei IGBTs oder MOSFETS auf, die in Antiserie geschaltet sind. Dadurch kann dieselbe Ansteuerung für beide Demultiplexerabschnitte 13 und 14 verwendet werden. Durch die bipolare Ausführung kann der Demultiplexer 11 unabhängig von der Polarität arbeiten. Dadurch kann der Demultiplexer 11 in unmittelbarer Nähe der Senkelektrodensegmente 1 und 2 angebracht werden und bspw. sowohl für das Schruppen als auch für das Schlichten verwendet werden.

Wie auch aus Fig. 5a ersichtlich, wird ein Signal MEL_POI, das vom Generator GEN kommt und sowohl die Steuersignale A/B also auch die Generatorpulse MEL aufweist, an einem Eingang des Demultiplexers 11 eingespeist. An einem Knotenpunkt 12 teilt sich das eingespeiste Signal MEL_POI auf die beiden Demultiplexerabschnitte 13 und 14 auf. Je nach Art des Steuersignals A/B schaltet nun der Demultiplexerabschnitt 13 oder der Demultiplexerabschnitt 14 durch, sodass die Generatorpulse MEL entweder an einem mit CH1 bezeichneten ersten Demultiplexerausgang oder an einem mit CH2 bezeichneten zweiten Demultiplexerausgang oder, wie erwähnt, auch an beiden Demultiplexerausgänge ankommen. Der erste Demultiplexerausgang CH1 ist mit dem ersten Senkelektrodensegment 1 verbunden und der zweite Demultiplexerausgang CH2 mit dem zweiten Senkelektrodensegment 2 der Werkzeugelektrode.

Anhand der Fig. 6a wird beispielhaft eine Steuersequenz für eine Feinbearbeitung mit zwei Senkelektrodensegmenten 1 und 2 aus Kupfer und einem Werkstück 8 aus Stahl erklärt, um eine Rauheit Ra = 0.2 $\mu$m zu erreichen.

Nach dem Stand der Technik würde man pro Kanal Pulse mit einer Pulslänge = 2 $\mu$s, mit einer Pause = 6 $\mu$s zwischen den Generatorpulsen und mit einer Pulsamplitude = 1.2 A verwenden. Das Tastverhältnis ist folglich bei den im Stand der Technik verwendeten Parametern: Pulslänge / Periode, d.h. 2/(2+6) = 25%.

Diese Tastverhältnisse sind bspw. typisch für die Feinbearbeitung, bei der die Senkmaschine mit ultrakurzen Pulsen und meistens mit negativer Polarität arbeitet (d.h. Werkzeugelektrode negativ, Werkstückelektrode positiv gepolt).

Beim vorliegenden Ausführungsbeispiel erzeugt der Generator GEN bspw. Generatorpulse mit einer Pulslänge = 2 $\mu$s, mit einer Pulspause = 2 $\mu$s und mit einer Pulsamplitude = 1.2 A.

Das (Steuer-)Signal A/B hat eine Frequenz von 2* 1/(2 $\mu$s+6 $\mu$s) = 250 kHz, d.h. es wird alle 4 $\mu$s umgeschaltet. Wie aus Fig. 6a ersichtlich, verteilt bzw. schaltet der Demultiplexer 11 entsprechend die Generatorpulse MEL aufgrund des Steuersignals A/B gleichmäßig auf die beiden Ausgänge bzw. Elektrodenkabel, sodass abwechselnd an dem ersten Senkelektrodensegment 1 der Generatorpuls A und an dem zweiten Senkelektrodensegment 2 der Generatorpuls B ankommt.

Es ist sofort ersichtlich, dass in diesem Fall bei einer Bearbeitung gemäß Stand der Technik theoretisch höchstens 125.000 Pulse pro Sekunde möglich sind. Hingegen wird es erfindungsgemäß möglich, die theoretische Anzahl Pulse pro Sekunde und die Abtragsrate zu verdoppeln, in diesem Fall auf 250.000 Pulse pro Sekunde.

Fig. 6b zeigt einen beispielhaften Grenzfall für ein zweikanaliges Ausführungsbeispiel, nämlich ein Tastverhältnis von fast 50%. Bei den meisten Ausführungsbeispielen ist das Tastverhältnisse kleiner oder gleich 50 %, da ansonsten negative Auswirkungen auf die Pulsform der Generatorpulse auftreten können.

Bei manchen Ausführungsbeispielen werden Pulspakete verwendet, d.h. es werden mehrere aufeinanderfolgende Generatorpulse auf einem Kanal an ein Senkelektrodensegment 1 oder 2 geleitet, bevor der Demultiplexer 11 auf den bzw. die anderen Kanäle umschaltet. Pulspakete kommen beispielsweise bei Ausführungsbeispielen zum Einsatz, bei denen Bearbeitungen mit Graphitelektroden vorgenommen werden, die einen geringen Verschleiß haben.

Bei manchen Ausführungsbeispielen ist die Demultiplexerschaltung 11 mit einer Kurzschlussschaltung ergänzt, wie bspw. bei der in Fig. 5b dargestellten Demultiplexerschaltung 11'. Die Kurzschlussschaltung wird bspw. in Pulspausen zwischen den Generatorpulsen aktiviert. Dadurch kann eine Restspannung im Spalt abgebaut werden. Dies kann sich positiv auf den Erodierprozess auswirken. Insbesondere kann sich die Homogenität der bearbeiteten Fläche des Werkstücks 8 verbessern. Bei manchen Ausführungsbeispielen kann im Mehrkanalbetrieb die Kurzschlussschaltung wie eben beschrieben genutzt werden, oder es können auch die nicht aktiven Kanäle für die ganze Zeit kurzgeschlossen werden. Dadurch kann verhindert werden, dass sich Spannung durch kapazitive Kopplung der Werkzeugelektroden auf den nicht aktiven Kanälen aufbaut.

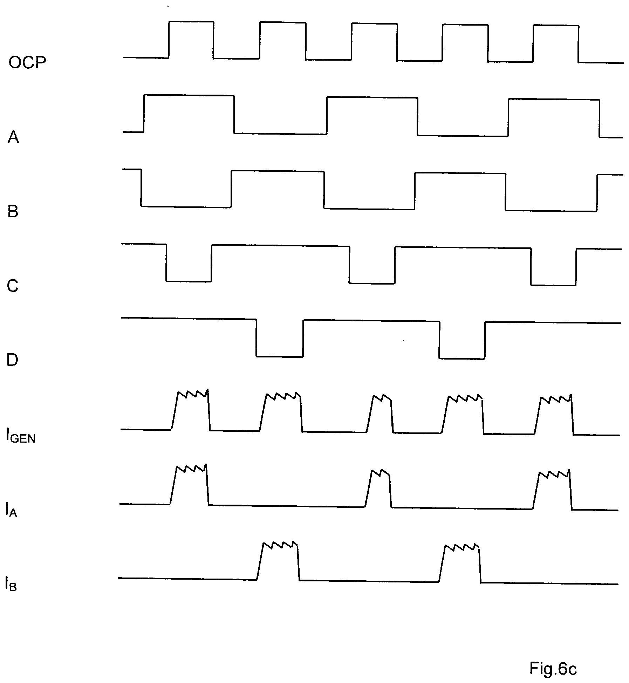

Verwendet man eine Sequenzreihe für die Demultiplexerschaltung 11' mit der Kurzschlussschaltung, wie in Fig. 6c gezeigt, so ergibt sich Folgendes. Die vom Generator GEN, aufgrund der empfangenen OCP-Signale (Fig. 6c), erzeugten Generatorpulse kommen als $I_{GEN}$-Signal (Fig. 5b, 6c) an einem Knotenpunkt 15 der Demultiplexerschaltung 11' an. Von diesem Knotenpunkt 15 werden die Generatorpulse auf zwei Demultiplexerabschnitte 16 und 17 verteilt, die in ihrer Funktion im Wesentlichen den Demultiplexerabschnitten 13 und 14 der in Fig. 5a gezeigten Demultiplexerschaltung 11 entsprechen.

Außerdem empfängt der Demultiplexerabschnitt 16 ein Steuersignal A und der Demultiplexerabschnitt 17 ein Steuersignal B, die jeweils als Rechtecksignale ausgebildet sind. Hat das Steuersignal A eine hohe Spannung, so schaltet der Demultiplexerabschnitt 16 durch und die Generatorpulse kommen als $I_A$-Signale an dem Senkelektrodensegment 1 an. Gleichzeitig ist der zweite Demultiplexerabschnitt 16 durch das Signal B mit niedriger Spannung gesperrt. Im nächsten Zyklus hat das Signal A eine niedrige Spannung und das Signal B eine hohe, sodass die Generatorpulsen $I_{GEN}$ vom Demultiplexerabschnitt 17 zum zweiten Senkelektrodensegment 2 als Signale $I_B$ durchgeschaltet werden, und der Demultiplexerabschnitt 16 gleichzeitig gesperrt ist.

Zusätzlich weist der Demultiplexer 11', wie erwähnt, eine Kurzschlussschaltung auf, die durch die Demultiplexerabschnitte 18 und 19 gebildet ist. Die Demultiplexerabschnitte 18 und 19 empfangen Steuersignale C bzw. D. Wie insbesondere aus Fig. 6c ersichtlich ist, sind in den Zeiträumen zwischen zwei Generatorpulsen $I_{GEN}$ (bzw. auch OCP), die Demultiplexerabschnitte 18 und 19 durchgeschaltet, sodass eine Kurzschlussschaltung entsteht und, wie oben erklärt, bspw. Restspannungen an den Senkelektrodensegmenten 1 und 2 abgebaut werden können.

Während der Einrichtphase werden vorzugsweise beide, bzw. alle Kanäle der funkenerosiven Bearbeitung zusammengeschaltet, wodurch eine Kollision auf irgendeinem Kanal erfasst wird.

Am Anfang einer Bearbeitung, beim sog. Anerodieren, sind die Spaltbedingungen der Kanäle oftmals unterschiedlich, bspw. aufgrund geometrischer Abweichungen des Werkzeugs bzw. der Werkzeugelektroden(segmente) oder aufgrund von Ausrichtfehler. Beim Anerodieren können somit unterschiedliche Spaltweiten vorliegen, wodurch z.B. vorerst nur eine Werkzeugelektrode (bzw. Segment) arbeitet. In diesem Fall kann es von Vorteil sein, den Generator mit beiden, bzw. allen Werkzeugelektroden (bzw. Segmenten) zu verbinden. Dadurch können geometrische Abweichungen schneller korrigiert werden.

Bei manchen Ausführungsbeispielen kann ein Spalterfassungsmodul GAP ACQ prüfen, ob bspw. auf einem Kanal anhaltend Leerlauf vorliegt bzw. keine Entladung erfolgt, und aufgrund dessen diese Werkzeugelektrode seltener zuschalten.

Bei manchen Ausführungsbeispielen können für Schruppbearbeitungen mit hohen Tastverhältnissen alle Werkzeugelektroden (bzw. Segmente) elektrisch oder elektromechanisch miteinander verbunden werden, sodass die Senkmaschine monokanalig arbeitet. In diesem Fall spielt die Werkstückoberflächenqualität eine untergeordnete Rolle, da nach der Schruppbearbeitung weitere Bearbeitungseinstellungen (Vorschlichten und Schlichten) mit immer kleineren Strömen die erwünschte Oberflächenqualität erreichen. Bei dieser Betriebsart werden die Signale A und B bzw. C und D parallel angesteuert. Beim Vorschlichten und Schlichten sind die Tastverhältnisse kleiner und man kann wieder die Mehrkanalschaltung wie oben beschrieben einsetzen.

Wie erwähnt, kann bei manchen Ausführungsbeispielen der Demultiplexer 11 bzw. 11' so geschaltet werden, dass immer ein Puls pro Kanal geschaltet wird. Es können aber auch Pulspakete (beispielsweise drei Pulse) pro Kanal geschaltet werden. Der Kanal, der keine Pulse bekommt, kann dann bspw. inzwischen die Ionisierung abbauen und die erodierten Teilchen aus dem Spalt evakuieren oder zumindest deren Verteilung erreichen.

Bei manchen Ausführungsbeispielen kann es sinnvoll sein, auf dem gleichen Kanal mehrere Pulse in unmittelbarer Folge anzulegen, insbesondere, wenn im Vergleich mehr Material zu erodieren ist.

Wie oben erwähnt, führt ein einziges Signal G (Fig. 4) bspw. die Spaltspannung zum Spalterfassungsmodul GAP ACQ. Die Steuerung 9 kann die gemessenen Merkmale des Spaltes (beispielsweise Zündverzögerungszeit, Anzahl Kurzschlüsse, ...) dem jeweiligen Kanal trotzdem zuordnen, da dieselbe Steuerung 9 auch die Reihenfolge der aktiven Kanäle und die Spalterfassung steuert.

Bei manchen Ausführungsbeispielen kann die Steuerung 9 die empfangenen Spaltspannungssignale G analysieren und darauf basierend die Werkstückbearbeitung steuern. So kann beispielsweise die Steuerung 9 über das Antriebsmodul DRIVE den Servo für den Achsenvorschub entweder basierend auf einer Spannungsmittelung über die Kanäle oder basierend auf dem Kanal mit der niedrigsten Spannung oder basierend auf dem Kanal der niedrigsten Zündverzögerungszeit regeln.

Eine andere Möglichkeit ist, dass die Steuerung Einfluss auf die Reihenfolge der Pulse nimmt: so können einem Kanal, der bspw. ein Senkelektrodensegment mit größerer Fläche hat, mehr Generatorimpulse zugeordnet werden als anderen Kanälen, bei denen die Flächen der Senkelektrodensegmente kleiner sind. Dies kann die Steuerung 9 anhand der kanalspezifischen gemessenen Merkmale selbst erkennen, und somit kann die Steuerung 9 bei manchen Ausführungsbeispielen selbständig auf geänderte Bedingungen reagieren.

Bei manchen Ausführungsbeispielen können ein oder mehrere der folgenden Kriterien angewandt werden, um Generatorimpulse auf den anderen Kanal zu schalten:

1) Ist die Zündverzögerungszeit td des ersten Kanals (CH1) größer als die Zündverzögerungszeit td des zweiten Kanals (CH2), so bedeutet dies, dass der Spalt des Kanals 1 größer als der des Kanals 2 ist.

2) Ist die Leerlaufspannung Ui des ersten Kanals (CH1) größer als die Leerlaufspannung Ui des zweiten Kanals (CH2), so bedeutet dies, dass der Spalt des Kanals 1 größer als der des Kanals 2 ist.

3) Ist die Brennspannung Ue des ersten Kanals (CH1) niedriger als ein vorgegebener Referenzwert Ueref, so bedeutet dies, dass im ersten Kanal CH1 die Wahrscheinlichkeit von Stationärentladungen und von Lichtbögen hoch ist.

4) Ist die Leerlaufspannung Upeak des ersten Kanals (CH1) niedriger als ein vorgegebener Referenzwert Upeak_ref., so bedeutet dies, dass im ersten Kanal CH1 die Wahrscheinlichkeit von Stationärentladungen und von Lichtbögen hoch ist.

5) Ist der Hochfrequenzanteil der Brennspannung Ue des ersten Kanals (CH1) niedriger als ein vorgegebener Referenzwert Uhf_ref., so bedeutet dies, dass im ersten Kanal CH1 die Wahrscheinlichkeit von Stationärentladungen und von Lichtbögen hoch ist.

6) Wenn beide Brennspannungen Ue (CH1) und Ue (CH2) höher als ein vorgegebener Referenzwert Ueref (siehe Punkt3) sind, ist die Brennspannung Ue des ersten Kanals (CH1) größer als Ue des zweiten Kanals (CH2). Das heißt, dass der Spalt des Kanals 1 größer als der des Kanals 2 ist.

7) Ist auf einem Kanal die Anzahl von Kurzschlüssen Nk pro vorgegebener Zeiteinheit höher als ein Referenzwert Nkref, so muss man diesen Kanal ruhen lassen, auf den anderen Kanal umschalten, Prozesspausen einführen oder die Prozessparameter reduzieren.

8) Ist die Spannung Uo während der Pulspause kleiner als ein vorgegebener Referenzwert Uoref?

9) Ist bei Zuschalten einer "schwachen Spannung" Us die gemessene Spannung im Spalt während der Pulspause kleiner als ein Referenzwert Usref? Diese "schwache" Spannung kann man beispielsweise durch eine Serienschaltung mit einem Widerstand von 1 kΩ und einer Spannungsquelle von 200 V bilden.

10) Ist im Fall einer mehrkanaligen Drahtmaschine die Lage der Pulse stationär (die Differenz der an der Drahtstromzuführung oben und unten gemessenen Ströme ergibt die Lage des Funkens)?

Die oben erwähnten Kriterien wurden anhand von zwei Kanälen erklärt. Für den Fachmann ist klar, dass diese Kriterien auch auf Ausführungsbeispiele mit mehreren Kanälen anwendbar sind.

Bei manchen Ausführungsbeispielen können die Pulspausen zwischen den Generatorimpulsen an die geometrische Lage der Elektroden angepasst werden. Zum Beispiel können periphere Kanäle, d.h. Kanäle mit Senkelektrodensegmenten, die bspw. an einem Randbereich eines Senkelektrodenarrays liegen und die bessere Spülbedingungen haben als bspw. Senkelektrodensegmente im Inneren des Senkelektrodenarrays, eine kleinere Pulspause aufweisen, als die Kanäle, die zentral im Inneren liegen.

Bei manchen Ausführungsbeispielen kommen segmentierte Werkzeugelektroden zum Einsatz, um entsprechend gewünschte Geometrien zu erhalten. Zum Beispiel kann man mit konzentrischen Senkelektrodensegmenten Bohrungen mit sehr kleinem Seitenspalt erhalten, indem man auf den äußeren Kanal Entladungen schaltet, die einen kleineren Spalt erzeugen.

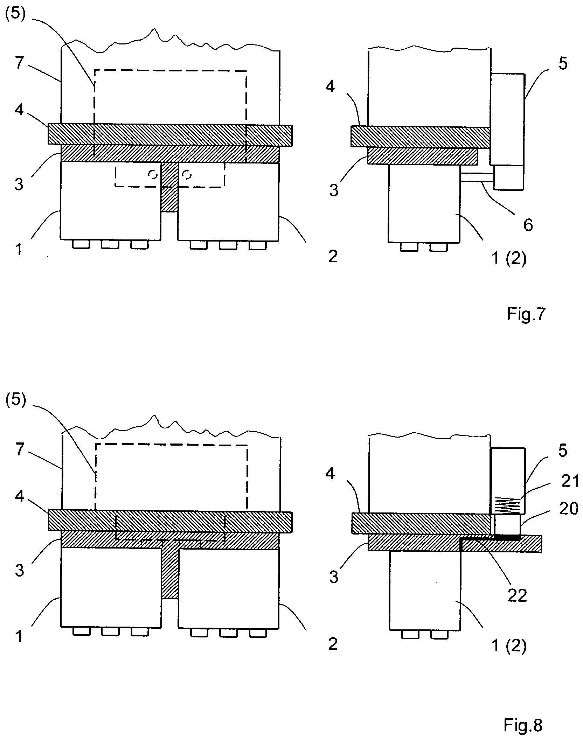

In Fig. 7 ist ein Ausführungsbeispiel einer erfindungsgemäß segmentierten Werkzeugelektrode dargestellt. Auf der linken Seite der Fig. 7 ist die Werkzeugelektrode in einer Vorderansicht und auf der rechten Seite in einer Seitenansicht gezeigt.

Die segmentierte Werkzeugelektrode weist Werkzeugelektrodensegmente 1 und 2 auf, die durch einen Isolierstoff 3, beispielsweise Vetronit, voneinander elektrisch isoliert sind. Die Werkzeugelektrodensegmente 1 und 2 sind auf einem Elektrodenhalter 4 montiert, der wiederum auf der Pinole 7 der Senkmaschine angebracht ist.

Die Demultiplexerschaltung 11 oder 11' ist in einem Aufnahmebereich 5 hinter oder auf der Seite der Pinole 7 montiert, vorzugsweise auf der entgegengesetzten Seite des Elektrodenwechslers, wie in der Seitenansicht rechts in Fig. 7 gezeigt ist. Durch diese Anordnung im Bereich 5 kann die Demultiplexerschaltung 11 bzw. 11' direkt mit den Werkzeugelektrodensegmenten 1 und 2 verbunden werden. Die Demultiplexerschaltung 11 bzw. 11' ist über eine Leitung (nicht gezeigt) mit dem Generator GEN und der Steuerung 9 verbunden. Durch die Anordnung des Demultiplexers direkt an der Pinole ist es möglich, insbesondere auch bei Werkzeugelektroden(segmenten) mit kleinen Abmessungen den oben beschriebenen Mehrkanalbetrieb zu realisieren, da es nicht notwendig ist, jeweils Leitungen für jedes Werkzeugelektrodensegment vom Generator und/oder der Steuerung zu den einzelnen Werkzeugelektrodensegmenten zu legen. Es reicht eine gemeinsame Leitung vom Generator und/oder der Steuerung zum Demultiplexer. Der Demultiplexer an der Pinole 7 kann direkt platzsparend mit seinen Ausgängen jeweilig mit den einzelnen Werkzeugelektrodensegmenten verbunden werden.

Die Werkzeugelektrode mit den Werkzeugelektrodensegmenten 1 und 2 kann bei manchen Ausführungsbeispielen automatisch gewechselt werden. Dazu wird ein Stromzuführungskontakt des Demultiplexers 11 bzw. 11' nach dem automatischen Werkzeugelektrodenwechsel durch einen pneumatischen betriebenen Kolben 6 gegen die Werkzeugelektrodensegmente 1 und 2 gepresst und verbindet dadurch die Werkzeugelektrodensegmente 1 und 2 mit dem jeweiligen Ausgang der Demultiplexerschaltung 11 bzw. 11'. Dementsprechend ist pro Werkzeugelektrodensegment 1 und 2 jeweils ein Stromzuführungskontakt vorgesehen, der die jeweilige Verbindung mit dem entsprechenden Ausgang des Demultiplexers 11 bzw. 11' herstellt. Während des Elektrodenwechsels öffnet der Kolben 6 die Stromzuführungskontakte. Dies ermöglicht bei manchen Ausführungsbeispielen, auch bei Multikanalbetrieb automatische Elektrodenwechselzyklen auszuführen.

Eine andere Möglichkeit einer lösbaren Kontaktierung ist aus Fig. 8 ersichtlich. Dort drückt eine Feder 21 den Stromkontakt 20 gegen einen Stromleiter 22, der sich im Inneren des Elektrodenhalters 4 befindet. Die Details des inneren Stromleiters 22, insbesondere die zuverlässige lösbare Kontaktierung mit den Werkzeugelektrodensegmenten 1, 2, werden hier nicht näher beschrieben, da sie sich dem Fachmann unmittelbar erschließen. Dieses System ist passiv und daher einfacher ausgestaltet als das System nach Fig. 7, da die Spannkraft der Pinole (Pressluft) und die Federkraft der Stromkontakte 20 mit der Feder 21 für eine sichere Stromzuführung sorgen.

Vorzugsweise werden bei der Verwendung der Maschine im Mehrkanalbetrieb breitere, bzw. herausragende Elektrodenhalter benutzt, wodurch eine passive Codierung erreicht wird. Standard-Elektrodenhalter erlauben es, die Maschine im monokanaligen Betrieb zu verwenden.

Die Kontakte des Demultiplexers werden bei zweikanaligem Betrieb in unmittelbarer Nähe der Isolationsschicht 3 der Werkzeugelektrodensegmente 1, 2 positioniert, sodass Werkzeugelektrodensegmente verschiedener Abmessung ohne maschinenseitige Änderung anwendbar sind.

Die lösbare Kontaktierung ist bei manchen Ausführungsbeispielen auch derart ausgelegt, dass eine kleine Elektrodenhalterrotation um die Z-Achse möglich ist, um die Werkzeugelektrode auszurichten.

Für das bessere Verständnis der Erfindung wurde in vorangehender Beschreibung und in den Figuren die übliche Anordnung einer Senkerosionsmaschine gewählt, bei welcher die Werkzeugelektrode über einen Elektrodenhalter an die Pinole gespannt und das Werkstück auf dem Maschinentisch montiert ist. Es ist dem Fachmann jedoch klar, dass bestimmte Umkehrungen möglich sind, bspw. kann ein Werkstück an der Pinole montiert sein und eine aus mehreren galvanisch getrennten Werkzeugelektrodensegmenten bestehende Werkzeugelektrode kann auf dem Maschinentisch montiert sein.

Die Strategie, eine Werkzeugelektrode in elektrisch voneinander isolierte Segmente aufzuteilen, ermöglicht eine kleinere Rauheit zu erreichen, wie aus der folgenden Überlegung verständlich wird:

Die Werkzeugelektrode und die Werkstückelektrode bilden elektrisch einen Plattenkondensator nach dem Gesetz

$$C = \varepsilon_0 \varepsilon_r \frac{A}{d}$$

wobei C die elektrische Kapazität, $\varepsilon_o$ die Influenzkonstante ($8.855 \times 10^{-12}$F/m), $\varepsilon_r$ die relative Dielektrizitätskonstante (81 für Wasser, 2.5 für Paraffin), A die Elektrodenfläche und d die Spaltweite sind.

Beim Anlegen einer Bearbeitungsspannung lädt sich der Plattenkondensator auf, und bei einer Funkenentladung entlädt er sich. Die Entladung erfolgt in Form nadelförmiger Pulse nach dem Gesetz:

$$I = U \sqrt{\frac{C}{L}}$$

wobei I der Spitzenstrom, U die Spaltspannung, C die Elektrodenkapazität, und L die Leitungsinduktivität sind.

Diese unerwünschten Stromspitzen sind proportional zur Kapazität und zur Elektrodenfläche, verschlechtern die Oberflächenqualität und führen zu erhöhtem Elektrodenverschleiß. So wird die Fähigkeit, feine Oberflächenqualitäten zu erreichen, von der Elektrodenfläche begrenzt. Diese Begrenzung resultiert aus den physikalischen Gesetzen und kann nicht durch eine Optimierung der Maschinenparameter behoben werden.

Es sind Methoden bekannt, um die Elektrodenkapazität durch vergrößern des Spaltes zu reduzieren. Dies geschieht beispielsweise durch Additive im Dielektrikum. Dies kann aber gleichzeitig zur Verringerung der Abbildungsgenauigkeit führen.

Ein weiteres Ausführungsbeispiel der Erfindung betrifft beispielhaft die funkenerosive Drahtbearbeitung von Silizium. Bei manchen Ausführungsbeispielen müssen aus Stäben aus monokristallinem Silizium beispielsweise dünne Scheiben für die Herstellung von Solarzellen geschnitten werden. Um wirtschaftlich gegenüber bekannten Lösungen zu sein, die nicht auf funkerosiven Prozessen beruhen und bspw. eine Schnittgeschwindigkeit von ca. 1.1 mm/min für einen 6-Zoll Siliziumstab erreichen, ist bei manchen Ausführungsbeispielen die Drahterosionsmaschine eine Multikanalmaschine, die wie oben mit einer entsprechenden Demultiplexerschaltung 11 oder 11' ausgerüstet ist. Damit lässt sich bei manchen Ausführungsbeispielen eine Schnittgeschwindigkeit von ca. 0.2 mm/min und pro Kanal erreichen. Da bei manchen Ausführungsbeispielen das Tastverhältnis der angewandten Generatorimpulse 15 % ist, kann man mit einem einzigen Generator bis zu 6 Kanäle speisen.

Die Strategie, eine Werkzeugelektrode in elektrisch voneinander isolierte Segmente aufzuteilen, ermöglicht es ferner gleichzeitig mit unterschiedlichen Parametersätzen des Generators verschiedene Gebiete desselben Werkstücks unterschiedlich zu bearbeiten, in Bezug auf Oberflächenbeschaffenheit, Geometrie, funkenerosiver Beschichtung und weitere durch die funkenerosive Bearbeitung beeinflussbare Werkstückeigenschaften.

Die Generatorparameter werden bei dieser Betriebsart in Echtzeit für jeden Kanal anders eingestellt. Beispielsweise kann man auf derselben erodierten Form zwei Gebiete mit verschieden Rauheiten gleichzeitig erreichen, aus funktionellen (bspw. bei Gehäuseformen für integrierten Schaltungen, optische Anwendungen) oder aus ästhetischen Gründen (Strukturierung der Oberflächen).

Bei manchen Ausführungsbeispielen kann eine erfindungsgemäße Vorrichtung zur funkenerosiven Bearbeitung als nachrüstbarer Bausatz ausgestaltet sein, wobei dieser Bausatz zumindest folgende Elemente umfasst: ein Schaltelement mit einem Eingang für den Anschluss des Generators GEN, sowie zwei Ausgängen für den Anschluss der Elektrodenkabel A und B bzw. der Werkzeugelektroden 1 und 2.

Im einfachsten Fall schaltet die Demultiplexerschaltung einfach "stur" abwechselnd zwischen den Kanälen um. Bei manchen Ausführungsbeispielen sind jedoch verschiedene Ausbaustufen möglich. Vorzugsweise ist der Demultiplexerbausatz mit einer eigenen Intelligenz ausgestattet. Der Demultiplexerbausatz kann bspw. ein eigenes Spalterfassungsmodul zur Bewertung des Spaltzustandes und eine eigene Steuereinheit zur unmittelbaren Steuerung des Demultiplexers beinhalten. Die Steuereinheit des Demultiplexerbausatz erkennt die vom Generator kommenden Spannungs- und Strompulse und schaltet eigenständig nach jedem Impuls den Demultiplexer um, wodurch die Steuerleitung A/B entfallen kann.

Somit kann die Erfindung praktisch in jeder Maschine eingesetzt werden, insbesondere als nachrüstbarer Bausatz. Besonders vorteilhaft ist solch ein Bausatz in all jenen Maschinen, die bereits mit modernen Generatoren ausgerüstet sind, d.h. bei solchen Maschinen, bei denen die vom Generator erzeugbare Pulsfrequenz höher als die für den speziellen Erosionsprozess benötigte Pulsfrequenz ist.

Dieser Demultiplexerbausatz ist vorzugsweise in Form einer Box zur Aufnahme der Demultiplexerschaltung, der Steuerelektronik und der Anschlüsse zur Verbindung des Generators und der Werkzeugelektroden ausgestaltet. Die Box ist so ausgestaltet, dass sie im Bereich der Werkzeugelektrode montiert werden kann. Maschinenseitig ist dann lediglich die Werkzeugelektrode mit galvanisch getrennten Werkzeugelektroden 1 und 2 vorzusehen, wobei der Anschluss der Elektrodenkabel an die Werkzeugelektroden 1 und 2 im einfachsten Fall manuell erfolgen kann.

Die oben beschriebenen Ausführungsbeispiele des Verfahren bzw. der Vorrichtung eignen sich für alle funkenerosiven Bearbeitungen der Senkerosion und der Drahterosion, aber auch für das funkenerosive Bohren, Mikrobohren, Fräsen und Schleifen, wie für den Fachmann ersichtlich ist. Das Verfahren eignet sich für pulsgeneratorgestützte Bearbeitungsverfahren mit relativ hoher Pulsfrequenz, insbesondere für Impulse kürzer als 1 ms.

Bei manchen Ausführungsbeispielen können Mehrfacheinsenkungen bearbeitet werden, und die Endoberfläche kann eine kleine Rauheit aufweisen. Dies ist zum Beispiel bei der Bearbeitung der Formen für die Herstellung von LEDs erforderlich.

**Patentansprüche**

1.    Vorrichtung zur funkenerosiven Bearbeitung eines Werkstückes, umfassend:

      eine Steuerung (9) zum Steuern der Bearbeitung des Werkstücks;
      ein Generatormodul (GEN) zum Erzeugen von Generatorpulsen; wenigstens eine erste und eine zweite Werkzeugelektrode (1, 2), wobei die erste und zweite Werkzeugelektrode (1, 2) als Werkzeugelektrodensegmente gemeinsam auf einer Werkzeugelektrode ausgebildet sind; und wenigstens ein Schaltelement (11, 11'), das mit dem Generator (GEN) und der ersten und zweiten Werkzeugelektrode (1, 2) verbunden ist; wobei die Steuerung (9) das Schaltelement (11, 11') derart steuert, dass der Generator (GEN) entweder mit der ersten (1) oder der zweiten Werkzeugelektrode (2) verbunden ist und dadurch die Generatorpulse entweder der ersten (1) oder der zweiten (2) Werkzeugelektrode zuführt, wobei die Steuerung (9) weiter dazu ausgebildet ist, den Generator (GEN) mit unterschiedlichen Parametersätzen für die erste und zweite Werkzeugelektrode (1, 2) zu steuern, um das Werkstück jeweils im Gebiet der ersten und zweiten Werkzeugelektrode (1, 2) mit einem unterschiedlichen Bearbeitungsziel zu bearbeiten.

2.    Vorrichtung nach Anspruch 1, ferner eine Leitung aufweisend, die den Generator (GEN) mit einem Eingang des Schaltelements (11, 11') verbindet, wobei das Schaltelement (11, 11') weiter wenigstens einen ersten und einen zweiten Ausgang aufweist, und jeweils ein Ausgang mit jeweils einer Werkzeugelektrode (1, 2) verbunden ist.

3. Vorrichtung nach einem der vorhergehenden Ansprüche, wobei die erste und zweite Werkzeugelektrode (1, 2) durch ein Isoliermaterial (3) elektrisch voneinander isoliert sind.

4. Vorrichtung nach einem der vorhergehenden Ansprüche, weiter eine Kurzschlussschaltung umfassend, wobei die Steuerung (9) die Kurzschlussschaltung derart steuert, dass sie wenigstens eine nicht aktive Werkzeugelektrode (1, 2) und/oder eine Werkzeugelektrode (1, 2) in einer Pause zwischen zwei Kanalpulsen kurzschließt.

5. Vorrichtung nach einem der vorhergehenden Ansprüche, wobei die Steuerung (9) das Schaltelement (11, 11') derart steuert, dass die erste und zweite Werkzeugelektrode (1, 2) derart abwechselnd mit dem Generator (GEN) verbunden sind, dass abwechselnd jeweils eine erste und eine zweite Anzahl an einzelnen Generatorpulsen der ersten bzw. der zweiten Werkzeugelektrode (1, 2) zugeführt wird.

6. Vorrichtung nach einem der vorhergehenden Ansprüche, wobei die Steuerung (9) ferner ausgebildet ist, das Schaltelement (11, 11') derart zu steuern, dass es Generatorpulse der ersten (1) und der zweiten (2) Werkzeugelektrode gleichzeitig zuführt.

7. Vorrichtung nach einem der vorhergehenden Ansprüche, ferner einen bewegbaren Stromzuführungskontakt (6, 20) zum automatischen Kontaktieren der Werkzeugelektroden (1, 2) aufweisend.

8. Verfahren zum Steuern einer Vorrichtung zur funkenerosiven Bearbeitung eines Werkstückes nach einem der Ansprüche 1 bis 7, wobei das Verfahren umfasst:

Erzeugen von Generatorpulsen mit einem Generator (GEN); und
Steuern eines Schaltelements (11, 11') derart, dass die vom Generator (GEN) erzeugten Generatorpulse entweder wenigstens einer ersten oder einer zweiten Werkzeugelektrode (1,2) zugeführt werden, wobei der Generator (GEN) mit unterschiedlichen Parametersätzen für die erste und zweite Werkzeugelektrode (1, 2) gesteuert wird, um das Werkstück jeweils im Gebiet der ersten und zweiten Werkzeugelektrode (1, 2) mit einem unterschiedlichen Bearbeitungsziel zu bearbeiten.

9. Verfahren nach Anspruch 8, bei welchem eine erste und eine zweite Anzahl aufeinanderfolgender Generatorpulse abwechselnd der ersten bzw. der zweiten Werkzeugelektrode (1, 2) zugeführt wird.

10. Verfahren nach Anspruch 9, bei welchem das Verhältnis von erster zu zweiter Anzahl in Abhängigkeit der Geometrie der Werkzeugelektroden (1, 2) gesteuert wird.

11. Verfahren nach einem der Ansprüche 8 bis 10, bei welchem wenigstens eine Spalteigenschaft eines Spalts zwischen den Werkzeugelektroden (1, 2) und dem Werkstück (8) ermittelt wird, und bei welchem die wenigstens eine Spalteigenschaft derjenigen Werkzeugelektrode (1, 2) zugeordnet wird, die zum Ermittlungszeitpunkt aktiv war.

12. Verfahren nach Anspruch 11, bei welchem die Spalteigenschaft wenigstens eine der folgenden Eigenschaften umfasst: Zündverzögerungszeit, Leerlaufspannung, Brennspannung, Anzahl der Kurzschlüsse pro vorgegebener Zeiteinheit, Spaltspannung während einer Pulspause zwischen wenigstens zwei Generatorpulsen, Spaltspannung während einer Pulspause zwischen wenigstens zwei Generatorpulsen bei einer vorgegebenen, angelegten Spaltspannung, Hochfrequenzanteil der Brennspannung.

13. Verfahren nach einem der Ansprüche 11 bis 12, bei welchem die Anzahl und/oder die Eigenschaft der Generatorpulse, die einer zum Ermittlungszeitpunkt nicht aktiv gewesenen Werkzeugelektrode (1,2) aufeinanderfolgend zugeführt werden, in Abhängigkeit der ermittelten Spalteigenschaft gesteuert wird.

14. Verfahren nach einem der Ansprüche 8 bis 12, bei welchem eine Pulspause zwischen den einer Werkzeugelektrode (1, 2) zugeführten Generatorpulsen in Abhängigkeit der geometrischen Lage dieser Werkzeugelektrode (1, 2) relativ zu wenigstens einer anderen Werkzeugelektrode (1, 2) gesteuert wird.

**Claims**

1. Device for electrical discharge processing of a workpiece, comprising:

a controller (9) for controlling the processing of the workpiece;
a generator module (GEN) for generating generator pulses; at least one first and one second tool electrode (1, 2), wherein the first and second tool electrodes (1, 2) are formed as tool electrode segments together on a tool electrode; and
at least one switching element (11, 11') which is connected to the generator (GEN) and the first and second tool electrodes (1, 2);

wherein the controller (9) controls the switching element (11, 11') in such a way that the generator (GEN) is connected either to the first (1) or the second tool electrode (2) and thereby the generator pulses are delivered either to the first (19) or the second tool electrode (2), wherein the controller (9) is also designed to control the generator (GEN) with different parameter sets for the first and second tool electrode (1, 2), in order to process the workpiece respectively in the area of the first and second tool electrodes (1, 2) with a different processing objective.

2. Device according to claim 1, also including a line which connects the generator (GEN) to an input of the switching element (11, 11'), wherein the switching element (11, 11') also has at least one first and one second output, and each output is connected to a respective tool electrode (1, 2).

3. Device according to one of the preceding claims, wherein the first and second tool electrodes (1, 2) are electrically insulated from one another by an insulation material (3).

4. Device according to one of the preceding claims, also comprising a short circuit, wherein the controller (9) controls the short circuit in such a way that it short-circuits at least one inactive tool electrode (1, 2) and/or a tool electrode (1, 2) in an interval between two channel pulses.

5. Device according to one of the preceding claims, wherein the controller (9) controls the switching element (11, 11') in such a way that the first and second tool electrodes (1, 2) are connected alternately to the generator (GEN) in such a way that in each case a first and a second number of generator pulses are alternately delivered to the first or the second tool electrode (1, 2).

6. Device according to one of the preceding claims, wherein the controller (9) is also designed to control the switching element (11, 11') in such a way that it delivers generator pulses simultaneously to the first (1) and the second tool electrode (2).

7. Device according to one of the preceding claims, also including a movable power supply contact (6, 20) for automatically contacting the tool electrodes (1,2).

8. Method of controlling a device for electrical discharge processing of a workpiece according to one of claims 1 to 7, wherein the method comprises:

   generating generator pulses with a generator (GEN);
   and controlling a switching element (11, 11') in such a way that the generator pulses generated by the generator (GEN) are delivered either to a first or to a second tool electrode (1, 2), wherein the generator (GEN) is controlled with different parameter sets for the first and second tool electrodes (1, 2) in order to process the workpiece respectively in the area of the first and second tool electrodes (1, 2) with a different processing objective.

9. Method according to claim 8, wherein a first and a second number of successive generator pulses are delivered alternately to the first or the second tool electrode (1, 2).

10. Method according to claim 9, wherein the ratio of the first to the second number is controlled as a function of the geometry of the tool electrodes (1, 2).

11. Method according to one of claims 8 to 10, wherein at least one gap characteristic of a gap between the tool electrodes (1, 2) and the workpiece (8) is determined, and wherein the at least one gap characteristic is associated with the tool electrode (1,2) which was active at the time of determination.

12. Method according to claim 11, wherein the gap characteristic comprises at least one of the following characteristics: ignition delay time, open circuit voltage, burn voltage, number of short circuits per predetermined unit of time, gap voltage during a pulse interval between at least two generator pulses, gap voltage during a pulse interval between at least two generator pulses at a predetermined applied gap voltage, high frequency component of the burn voltage.

13. Method according to one of claims 11 to 12, wherein the number and/or the characteristic of the generator pulses which are delivered successively to a tool electrode (1, 2) which was inactive at the time of determination is controlled as a function of the determined gap characteristic.

14. Method according to one of claims 8 to 12, wherein a pulse interval between the generator pulses delivered to a tool electrode (1, 2) fed is controlled as a function of the geometric position of this tool electrode (1, 2) relative to at least one other tool electrode (1, 2).

**Revendications**

1. Dispositif de traitement par étincelage d'une pièce usinée comprenant :

   une commande (9) pour la commande du traitement de la pièce usinée ;

un module générateur (GEN) pour la génération de pulsations de générateur ;

au moins une première et une seconde électrode d'outil (1, 2), dans lequel la première et seconde électrode d'outil (1, 2) sont réalisées comme des segments d'électrode d'outil ensemble sur une électrode d'outil ; et

au moins un élément de commutation (11, 11') qui est relié au générateur (GEN) et à la première et seconde électrode d'outil (1, 2) ;

dans lequel la commande (9) commande l'élément de commutation (11, 11') de telle manière que le générateur (GEN) soit relié à la première (1) ou la seconde électrode d'outil (2) et par là même amène les pulsations de générateur à la première (1) ou à la seconde (2) électrode d'outil, dans lequel la commande (9) est en outre réalisée afin de commander le générateur (GEN) avec différents jeux de paramètres pour la première et seconde électrode d'outil (1, 2) afin de traiter la pièce usinée respectivement dans la zone de la première et seconde électrode d'outil (1, 2) avec une cible de traitement différente.

2. Dispositif selon la revendication 1, présentant en outre une conduite qui relie le générateur (GEN) à une entrée de l'élément de commutation (11, 11'), dans lequel l'élément de commutation (11, 11') présente en outre au moins une première et une seconde sortie et respectivement une sortie est reliée à respectivement une électrode d'outil (1, 2).

3. Dispositif selon l'une des revendications précédentes, dans lequel la première et seconde électrode d'outil (1, 2) sont isolées électriquement l'une de l'autre par un matériau isolant (3).

4. Dispositif selon l'une des revendications précédentes, comprenant en outre un montage de court-circuit, dans lequel la commande (9) commande le montage de court-circuit de telle manière qu'il court-circuite au moins une électrode d'outil (1, 2) non active et/ou une électrode d'outil (1, 2) dans une pause entre deux pulsations de canal.

5. Dispositif selon l'une des revendications précédentes, dans lequel la commande (9) commande l'élément de commutation (11, 11') de telle manière que la première et seconde électrode d'outil (1, 2) soient reliées en alternance au générateur (GEN) si bien qu'en alternance respectivement un premier et un second nombre de pulsations de générateur individuelles est transmis à la première ou la seconde électrode d'outil (1, 2).

6. Dispositif selon l'une des revendications précédentes, dans lequel la commande (9) est de plus réalisée afin de commander l'élément de commutation (11, 11') de telle manière qu'il transmette simultanément des pulsations de générateur à la première (1) et la seconde (2) électrode d'outil.

7. Dispositif selon l'une des revendications précédentes, présentant de plus un contact d'alimentation de courant (6, 20) mobile pour la mise en contact automatique des électrodes d'outil (1, 2).

8. Procédé de commande d'un dispositif pour le traitement par étincelage d'une pièce usinée selon l'une des revendications 1 à 7, dans lequel le procédé comporte :

la génération de pulsations de générateur avec un générateur (GEN) ; et

la commande d'un élément de commutation (11, 11') de telle manière que les pulsations de générateur générées par le générateur (GEN) soient transmises au moins à une première ou une seconde électrode d'électrode (1, 2), dans lequel le générateur (GEN) est commandé avec différents jeux de paramètre pour la première et la seconde électrode d'outil (1, 2) afin de traiter la pièce usinée respectivement dans la zone de la première et seconde électrode d'outil (1, 2) avec une cible de traitement différente.

9. Procédé selon la revendication 8, pour lequel un premier et un second nombre de pulsations de générateur consécutives sont transmis en alternance à la première ou la seconde électrode d'outil (1, 2).

10. Procédé selon la revendication 9, pour lequel le rapport entre le premier et le second nombre est commandé en fonction de la géométrie des électrodes d'outil (1, 2).

11. Procédé selon l'une des revendications 8 à 10, pour lequel au moins une propriété de fente d'une fente est déterminée entre les électrodes d'outil (1, 2) et la pièce usinée (8) et pour lequel l'au moins une propriété de fente est associée à l'électrode d'outil (1, 2) qui était active au moment de la détermination.

12. Procédé selon la revendication 11, pour lequel la propriété de fente comporte au moins une des propriétés suivantes : temps de retard d'allumage, tension de marche à vide, tension de combustion, nombre de courts-circuits par unité de temps prescrite, tension de fente pendant une pause de pulsation entre au moins deux pulsations de générateur, tension de fente pendant une pause de pulsation entre au moins deux pulsations de générateur pour une tension de fente appliquée prescrite, contenu haute fréquence de la tension de combustion.

**13.** Procédé selon l'une des revendications 11 à 12, pour lequel le nombre et/ou la propriété des pulsations de générateur qui sont transmises de manière consécutive à une électrode d'outil (1, 2) qui est non active au moment de la détermination, est commandée en fonction de la propriété de fente déterminée.

**14.** Procédé selon l'une des revendications 8 à 12, pour lequel une pause de pulsation est commandée entre les pulsations de générateur transmises à une électrode d'outil (1, 2) en fonction de la position géométrique de cette électrode d'outil (1, 2) par rapport à au moins une autre électrode d'outil (1, 2).

Stand der
Technik

Fig.1

Stand der
Technik

Fig.2

Stand der
Technik

Fig.3a

Stand der
Technik

Fig.3b

Fig.4

Fig.5a

Fig.5b

Fig.6a

Fig.6b

Fig.6c

Fig.7

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6548028 B1
- JP 2001269818 A
- EP 0879664 A1
- JP 56089438 A
- EP 1415747 A2
- EP 0076150 A2
- JP 54109697 A
- JP 53143099 A
- DE 3644952 A1